# EUROPEAN PATENT SPECIFICATION

(11) **EP 1 226 991 B1**
(45) Date of publication and mention of the grant of the patent: **22.09.2004**
(21) Application number: 02001565.7
(22) Date of filing: 23.01.2002
(51) Int. Cl.: B60H 1/34

(54) **An air vent outlet unit for a ventilation and/or air conditioning system for the passenger compartment of a motor vehicle**
Luftaustrittsanlage für eine Lüftung und/oder Klimaanlage im Innenraum eines Kraftfahrzeuges
Unité de sortie d'air d'un système de ventilation et/ou d'air conditionné dans un compartiment passager d'un véhicule à moteur

(30) Priority: 26.01.2001 IT TO010012 U
(43) Date of publication of application: 31.07.2002
(73) Proprietor: Sila Holding Plastica S.r.l., 10121 Torino (IT)
(72) Inventor: Melis, Salvatore, 10093 Collegno, (Torino) (IT); Cappelletti, Roberto, 10024 Moncalieri, (Torino) (IT)
(74) Representative: Fioravanti, Corrado

(56) References cited:
- DE-C- 19 735 858
- US-A- 5 014 964
- US-A- 5 954 579
- US-A- 6 012 297
- US-A- 6 131 336

## Description

The present invention relates to an air vent outlet unit for a ventilation and/or air conditioning system for the passenger compartment of a motor vehicle.

DE19735858C discloses a vent outlet unit according to the preamble of claim 1.

In modern motor vehicle passenger compartment ventilation and/or air conditioning systems, closable air vents are provided at the end of the ducts which introduce air into the passenger compartment. Each air vent can be closed or opened manually by acting on a control wheel which projects partially into the passenger compartment and is fixed for rotation with a shutter element mounted rockably within the air vent itself. Usually the rockable shutter element is able to assume an open position in which it is disposed in a plane parallel to the direction of the flow of air from the associated duct to offer a minimal resistance to the flow of air, and a closure position in which it is orientated perpendicularly with respect to the direction of the air flow or, in any event, in such a way as to occlude substantially all the flow cross section of the ventilation duct. It is also possible to orientate the shutter element to a plurality of intermediate angular positions to regulate the flow depending on the requirements of the passengers.

Air vents of the above type are normally disposed centrally and on the sides of the instrument panel, on the side pillars which support the roof and at the centre of the passenger compartment on the so-called "tunnel" located between the front seats to direct air into the region of the rear seats. The majority of the above-described air vents are not easily reachable by the driver who, if he wishes to adjust them directly, is constrained in order to reach them to assume an uncomfortable position which, at least for several seconds, can result in loss of control of the vehicle.

The object of the present invention is provide an improved air vent outlet unit capable of overcoming the above-discussed disadvantages.

These and other objects and advantages, which will become clearer hereinafter, are achieved in accordance with the present invention by an air vent outlet unit as defined in the claims.

The characteristics and advantages of the invention will become clearer from the detailed description of one embodiment thereof with reference to the attached drawings, given by way of non-limitative indication, in which:
Figure 1 is a perspective side view from above and behind of a vent outlet unit according to the invention;

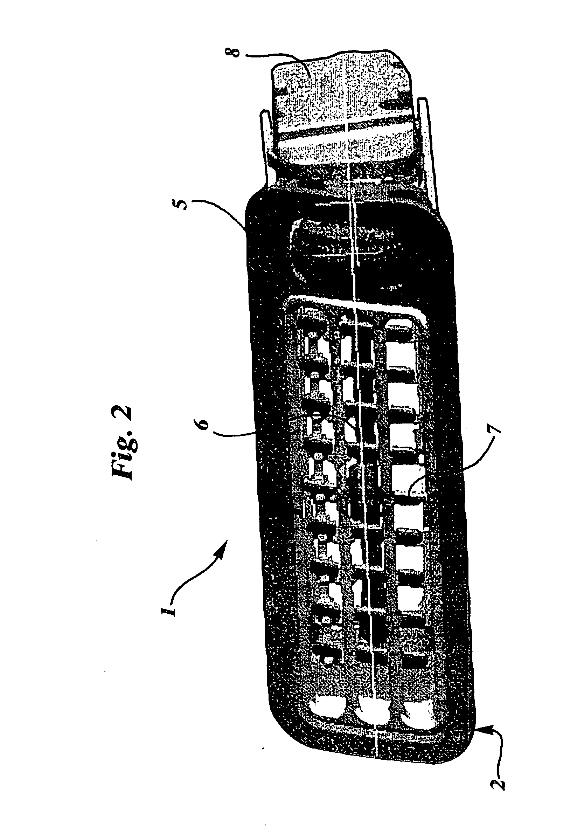

Figure 2 is a perspective view from the front and one side of the vent outlet unit of Figure 1;

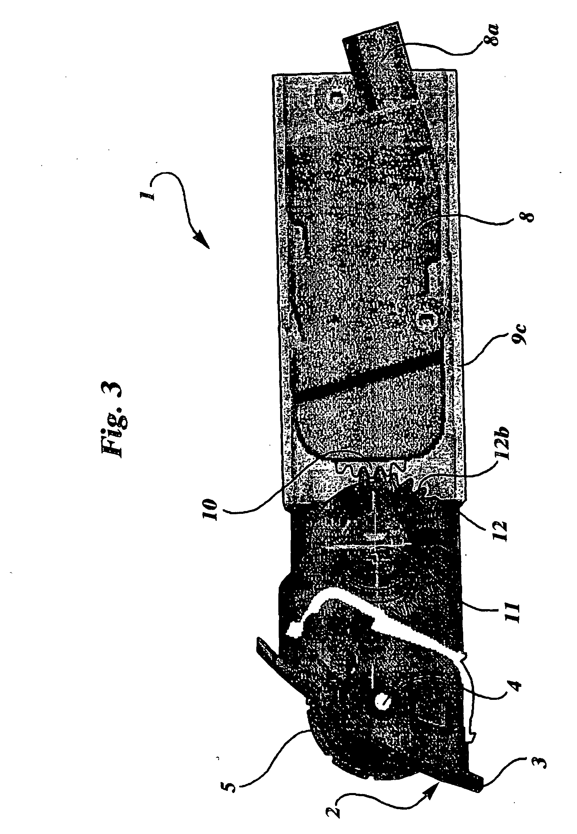

Figure 3 is a side view of the unit of Figure 1;

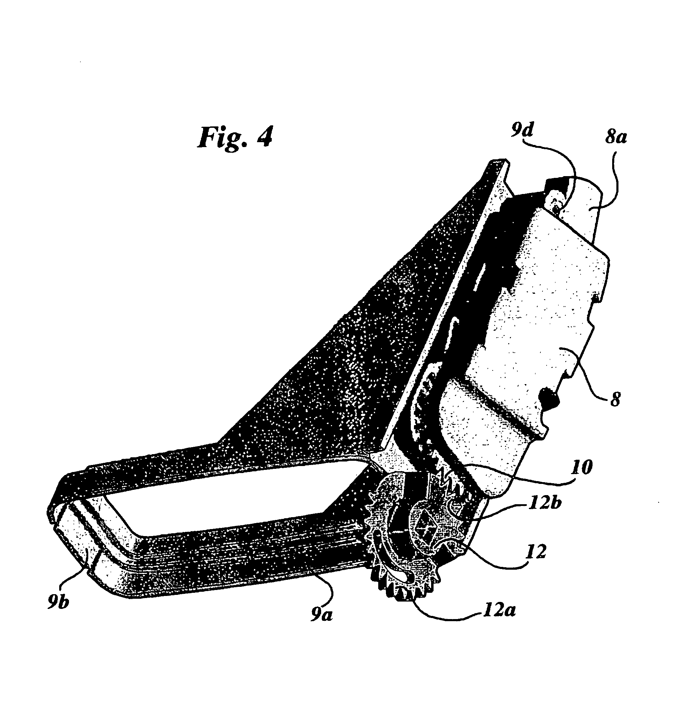

Figure 4 is a perspective view of several components of the vent outlet unit;
Figure 5 is a perspective view of a support element for the vent outlet unit;

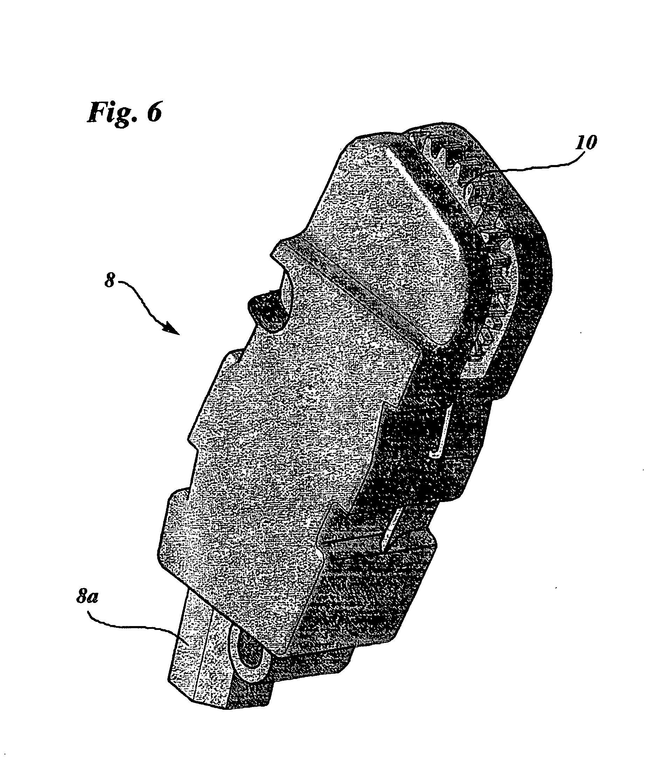

Figure 6 is a perspective view of an actuator device incorporated in the vent outlet unit;
Figure 7 is a perspective view of a toothed transmission member associated with the actuator device of Figure 6.

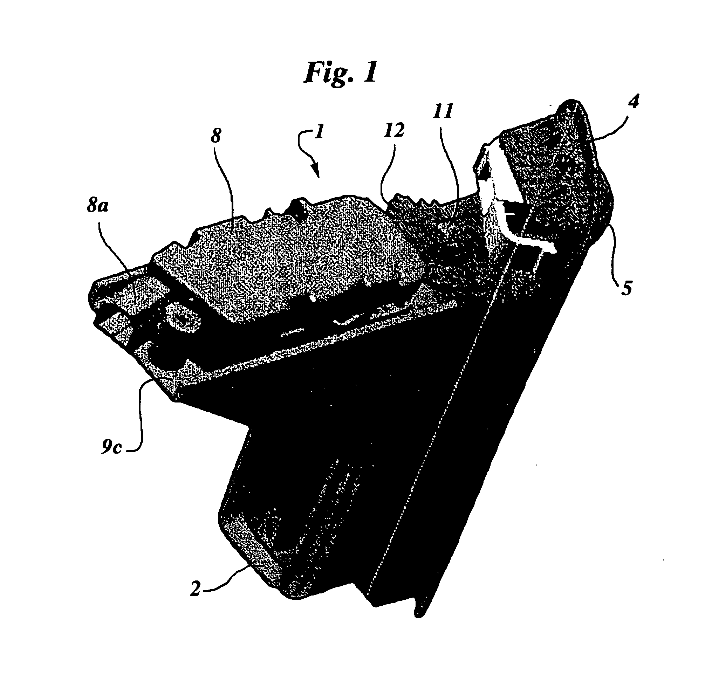

Referring initially to Figure 1, an air vent outlet unit according to the present invention is generally indicated 1. The unit comprises an air vent outlet 2 of conventional type, with a body of plastics material of box-like form open at the front and the rear. The body of the vent outlet unit integrally forms a front flange 3 on one side of which a manual control wheel 5 is rotatably mounted about a horizontal pin 4. A closure element 6 is pivotally mounted about a horizontal axis 11 within the vent outlet unit, this being of conventional type and therefore not described in detail. On the front or outer side of the vent outlet unit is provided a grille 7 with orientable fins for directing the outlet flow in a direction chosen by the user.

In the present description, and in the claims, the terms and expressions indicating positions and orientations are intended to refer to the installed condition in the passenger compartment of a motor vehicle. Thus, the expressions "outer side" or "front side" indicate a side directed towards the passenger compartment of the vehicle and the expression "inner side" or "rear side" indicate a side facing the direction from which the air flow arrives at the outlet.

An important characteristic of the unit according to the present invention is that the outlet unit incorporates an actuator device controllable electrically from a remote position and connected to the shutter element 6 in order to be able to open and close the outlet.

The actuator device includes an electric motor the casing 8 of which is illustrated in the drawings, preferably a DC electric motor supplied via an electric cable (not illustrated) insertable in a connector portion 8a formed at the rear and connected to an electronic central control unit (not illustrated).

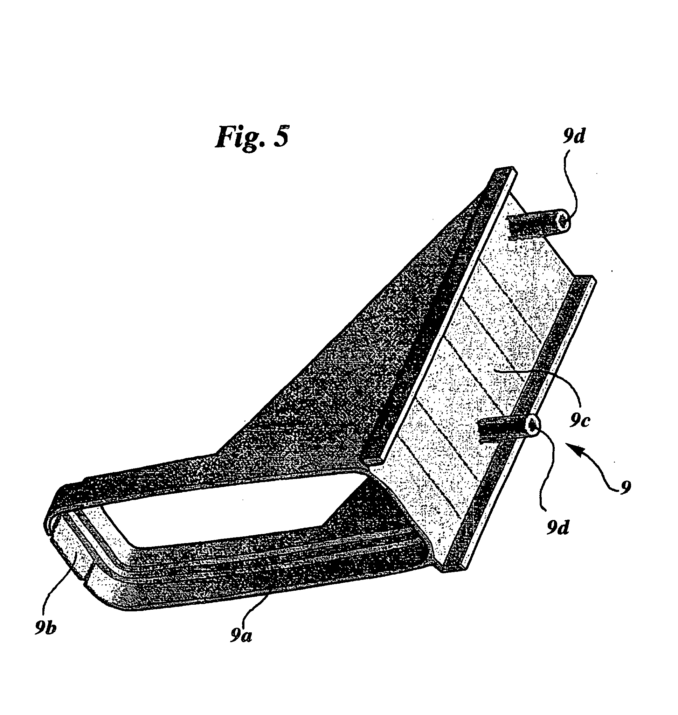

The casing 8 is mounted on a separate support 9, separately illustrated in Figure 5, which has an annular front portion 9a of elongate form corresponding to the profile of the rear part of the outlet unit 2, to which it is engaged by means of a resilient flexible tab 9b. The support 9 further has a vertical plate portion 9c with a pair of pin formations 9d for locking the casing 8 in the vertical position adjacent the plate 9c. The electric motor is conveniently of the flat type so that it can be incorporated in a casing of flattened shape which occupies little space at the back of the support 9, in a position essentially aligned in a longitudinal direction with the manual control wheel 5. The support 9 formed separately from the body of the outlet unit, advantageously allows application of the actuator device to pre-existing outlet units of conventional type.

As well as the electric motor, the box-like casing 8 also contains transmission members such as a worm screw and a final transmission gear wheel 10 which meshes with a toothed sector 12 flexibly mounted for rotation about the axis 11 and to the shutter element 6.

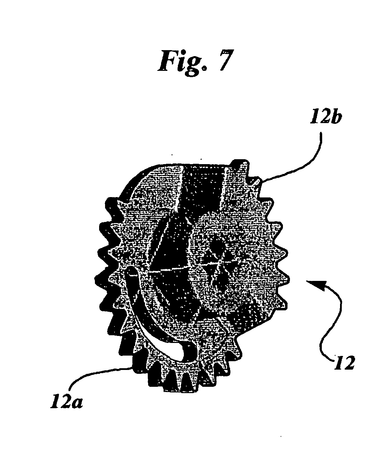

The toothed member 12, separately illustrated in Figure 7, has a front toothed sector 12a which meshes with a corresponding toothed sector (not illustrated) of the manual control wheel 5, and a rear toothed sector 12b which meshes with the toothed wheel 10 which is the final output transmission from the actuator device. The pivoting of the shutter element 6 can thus be controlled both manually, by the passenger near the vent outlet unit, and remotely by means of the actuator device via a push button electric control (not illustrated) located close to the driver and which can be easily reached from the driving position.

Thus the electric motor of the actuator device is turned on or off in a manner similar to devices for electric window winders. When the shutter element 6 arrives at its end-of-stroke position (completely open or completely closed), the supply current reaches a peak; the electronic central control unit, by monitoring the current consumed by the electric motor, is arranged to recognise the arrival at the end-of-stroke position when the shutter is fully open or fully closed, and automatically interrupts the supply of current to the motor when a predetermined threshold value is exceeded.

In a further embodiment, not illustrated, the vent outlet could be moulded in one piece with the support and/or casing of the electric motor.

## Claims

1. A vent outlet unit for a motor vehicle passenger compartment ventilation and/or air conditioning system, of the type comprising an outlet (2) having a body of box-like form open at the front and which can be connected at the rear to a duct which provides a flow of air, the outlet opening having a closure element (6) rotatable by means of a manual control member (5) between a first position in which the closure element (6) is orientated in such a way as to allow the introduction of the flow of air into the passenger compartment and a second position in which it is orientated in such a way as to close the outlet opening, **characterised in that** the outlet opening unit further includes an actuator device controllable electrically from a remote position and connected to the closure element (6) to move this element between the first and second positions.

2. A vent unit according to Claim 1, further comprising a support element (9) formed separately from the outlet and having means (9a) for mounting to the body of the outlet unit.

3. A vent unit according to Claim 2, in which the said mounting means include a portion (9a) of shape corresponding to the profile of the vent (2).

4. A vent unit according to Claim 2 or Claim 3, in which the said mounting means further include at least one resiliently flexible element (9b) for engagement with the vent (2).

5. A vent unit according to Claim 2, in which the support element (9) further has a side vertical plate portion (9c) for mounting the actuator device to one side of the vent (2).

6. A vent unit according to Claim 1 or Claim 5, in which the actuator device is mounted on the side of the vent in a position essentially aligned longitudinally with said manual control member (5).

7. A vent unit according to Claim 1, in which the actuator device is contained in a casing (8) of flattened shape fixable in a vertical position adjacent one side of the vent.

8. A vent unit according to Claim 1, in which the actuator device includes a final transmission member (10) acting on a transmission member (12) fixed for rotation with the closure element (6), the said transmission member (12) being also engaged with the manual control member (5).

9. A vent unit according to Claim 8, in which said transmission members (10, 12) and said manual control member (5) comprise toothed sectors.

10. A vent unit according to Claim 1, in which the actuator device comprises a DC electric motor.

11. A vent unit according to Claim 1, in which the actuator device is connectable electrically (8a) to an electric control located close to the driving position.

## Patentansprüche

1. Lüftungsauslass-Einheit für das Belüftungssystem und/oder die Klimaanlage des Fahrgastraums eines Kraftfahrzeugs, wobei die Einheit einen Auslass (2) mit einem kastenförmigen Körper besitzt, der vorne offen ist und an der Hinterseite mit einem Kanal verbunden werden kann, der eine Luftströmung liefert, wobei die Auslassöffnung ein Verschlusselement (6) besitzt, das mit einem Handsteuerelement (5) zwischen einer ersten Stellung, in der das Verschlusselement (6) so ausgerichtet ist, dass es das Einleiten der Luftströmung in den Fahrgastraum ermöglicht, und einer zweiten Stellung gedreht werden kann, in der es so ausgerichtet ist, dass es die Auslassöffnung verschließt, **dadurch gekennzeichnet, dass** die Auslassöffnung weiters eine Betätigungseinrichtung aufweist, die von einer entfernten Stelle aus elektrisch gesteuert werden kann und mit dem Verschlusselement (6) verbunden ist, um dieses Element zwischen der ersten und der zweiten Stellung zu bewegen.

2. Lüftungseinheit gemäß Anspruch 1, wobei die Einheit weiters ein Halteelement (9) enthält, das getrennt vom Auslass ausgebildet ist und eine Einrichtung (9a) besitzt, um den Körper der Auslasseinheit zu befestigen.

3. Lüftungseinheit gemäß Anspruch 2, wobei die Befestigungseinrichtung einen Teil (9a) aufweist, dessen Form dem Profil der Lüftung (2) entspricht.

4. Lüftungseinheit gemäß Anspruch 2 oder Anspruch 3, wobei die Befestigungseinrichtung weiters zumindest ein elastisch biegbares Element (9b) aufweist, um in die Lüftung (2) einzugreifen.

5. Lüftungseinheit gemäß Anspruch 2, wobei das Halteelement (9) weiters einen seitlichen, vertikalen Plattenteil (9c) besitzt, um die Betätigungseinrichtung an einer Seite der Lüftung (2) zu befestigen.

6. Lüftungseinheit gemäß Anspruch 1 oder Anspruch 5, wobei die Betätigungseinrichtung an der Seite der Lüftung in einer Stellung befestigt ist, die in Längsrichtung im Wesentlichen mit dem Handsteuerelement (5) ausgerichtet ist.

7. Lüftungseinrichtung gemäß Anspruch 1, wobei die Betätigungseinrichtung in einem Gehäuse (8) enthalten ist, das eine flache Form besitzt und in einer vertikalen Stellung neben einer Seite der Lüftung befestigt werden kann.

8. Lüftungseinrichtung gemäß Anspruch 1, wobei die Betätigungseinrichtung ein Endübertragungselement (10) aufweist, das auf ein Übertragungselement (12) einwirkt, das mit dem Verschlusselement (6) für eine Drehung befestigt ist, wobei das Übertragungselement (12) auch mit dem Handsteuerelement (5) in Eingriff steht.

9. Lüftungseinrichtung gemäß Anspruch 8, wobei die Übertragungselemente (10, 12) sowie das Handsteuerelement (5) Zahnsektoren enthalten.

10. Lüftungseinheit gemäß Anspruch 1, wobei die Betätigungseinrichtung einen Gleichstrommotor enthält.

11. Lüftungseinheit gemäß Anspruch 1, wobei die Betätigungseinrichtung elektrisch (8a) mit einer elektrischen Steuerung verbunden werden kann, die in der Nähe des Fahrers angeordnet ist.

## Revendications

1. Unité de sortie de ventilation pour un système de ventilation et/ou de conditionnement d'air du compartiment passager dans un véhicule à moteur, du type comprenant une sortie (2) ayant un corps avec une forme semblable à une boîte ouverte à la partie frontale et susceptible d'être connecté à l'arrière à un conduit qui véhicule un flux d'air, l'ouverture de sortie ayant un élément de fermeture (6) capable de tourner au moyen d'un élément de commande manuel (5) entre une première position dans laquelle l'élément de fermeture (6) est orienté de manière à permettre l'introduction du flux d'air dans le compartiment passager, et une seconde position dans laquelle il est orienté de manière à fermer l'ouverture de sortie, **caractérisée en ce que** l'unité d'ouverture de sortie inclut un dispositif d'actionnement susceptible d'être commandé électriquement depuis une position à distance, et connecté à l'élément de fermeture (6) pour déplacer cet élément entre la première et la seconde position.

2. Unité de sortie de ventilation selon la revendication 1, comprenant en outre un élément de support (9) formé séparément de la sortie et comprenant des moyens (9a) pour monter le corps sur l'unité de sortie.

3. Unité de sortie de ventilation selon la revendication 2, dans laquelle lesdits moyens de montage incluent une partie (9a) avec une forme correspondant au profil de la sortie (2).

4. Unité de sortie de ventilation selon l'une ou l'autre des revendications 2 et 3, dans laquelle lesdits moyens de montage incluent en outre au moins un élément élastiquement flexible (9b) destiné à venir engager la sortie (2).

5. Unité de sortie de ventilation selon la revendication 2, dans laquelle l'élément de support (9) comporte en outre une partie latérale (9c) en forme de plaque verticale pour monter le dispositif d'actionnement sur un côté de la sortie (2).

6. Unité de sortie de ventilation selon l'une ou l'autre des revendications 1 et 5, dans laquelle le dispositif d'actionnement est monté sur le côté de la sortie dans une position essentiellement alignée longitudinalement avec ledit élément de commande manuel (5).

7. Unité de sortie de ventilation selon la revendication 1, dans laquelle le dispositif d'actionnement est contenu dans un boîtier (8) de forme aplatie, capable d'être fixé en position verticale adjacente à un côté de la sortie.

8. Unité de sortie de ventilation selon la revendication 1, dans laquelle le dispositif d'actionnement inclut un élément de transmission final (10) agissant sur un élément de transmission (12) fixé en vue d'une rotation avec l'élément de fermeture (6), ledit élément de transmission (12) étant également engagé avec l'élément de commande manuel (5).

9. Unité de sortie de ventilation selon la revendication 8, dans laquelle lesdits éléments de transmission (10, 12) et ledit élément de commande manuel (5) comprennent des secteurs dentés.

10. Unité de sortie de ventilation selon la revendication 1, dans laquelle le dispositif d'actionnement comprend un moteur électrique à courant continu.

11. Unité de sortie de ventilation selon la revendication 1, dans laquelle le dispositif d'actionnement peut être connecté électriquement (8a) à une commande électrique située proche de la position de conduite.
